# FASCICULE DE BREVET EUROPEEN

(11) **EP 1 244 585 B1**
(45) Date de publication et mention de la délivrance du brevet: **24.03.2004**
(21) Numéro de dépôt: 01903869.4
(22) Date de dépôt: 04.01.2001
(51) Int. Cl.: B62D 65/00

(54) **PROCEDE DE MONTAGE D'OUVRANT DE VEHICULE AUTOMOBILE ET DISPOSITIF INTERVENANT DANS CE MONTAGE**
BEFESTIGUNGSVERFAHREN FÜR EINEN KRAFTFAHRZEUGSFLÜGEL UND VORRICHTUNG FÜR EIN SOLCHES VERFAHREN
METHOD FOR MOUNTING A MOTOR VEHICLE HINGED PANEL AND DEVICE THEREFOR

(30) Priorité: 05.01.2000 FR 0000083
(43) Date de publication de la demande: 02.10.2002
(73) Titulaire: PEGUFORM FRANCE, 27950 Saint Marcel (FR)
(72) Inventeur: HACHE, Bertrand, F-27200 Vernon (FR)
(74) Mandataire: Le Forestier, Eric
(86) Numéro de dépôt international: PCT/FR2001/000024
(87) Numéro de publication internationale: WO 2001/049557

(56) Documents cités:
- US-A- 4 186 476
- US-A- 4 375 716
- US-A- 5 283 937

## Description

L'invention concerne le domaine des procédés de montage d'ouvrant de véhicule automobile, notamment sur une chaîne de fabrication de véhicules automobiles.

L'invention concerne également un dispositif pour le montage d'un ouvrant de véhicule automobile, notamment sur une chaîne de fabrication de véhicules automobiles.

On connaît des procédés de montage d'ouvrant sur un véhicule automobile, dans lesquels les charnières de l'ouvrant sont montées sans réglage sur la caisse du véhicule, et dans lesquels on assemble ensuite l'ouvrant sur ces charnières avec un indexage figé. Mais, avec ce type de procédé, il arrive que les jeux résiduels et les affleurements soient hors des tolérances souhaitées.

Le document US-A-4 375 716 divulgue un procédé de montage d'ouvrant sur un véhicule utilisant deux éléments de référence comportant des trous positionnés sur une charnière de l'ouvrant et du véhicule.

Il divulgue un procédé de montage d'ouvrant sur une caisse de véhicule comportant une étape de montage d'une charnière sur une caisse de véhicule, une étape de positionnement d'un élément de référence sur la charnière, une étape de montage d'un ouvrant sur la charnière en positionnant l'ouvrant par rapport à un élément de référence.

Un but de l'invention est d'améliorer le positionnement de l'ouvrant sur la caisse.

Ce but est atteint, grâce à invention, avec un procédé de montage d'ouvrant sur une caisse de véhicule selon la revendication 1.

Ainsi, grâce à l'invention, on peut régler le positionnement de l'élément de référence par rapport à la caisse. Il suffit ensuite de fixer l'ouvrant sur la charnière en s'indexant sur l'élément de référence, sans autres moyens de positionnement spécifiques, pour que l'ouvrant soit correctement positionné par rapport à la caisse. L'ouvrant est donc positionné par rapport à la caisse et non par rapport aux charnières.

Avantageusement, le procédé selon l'invention présente les caractéristiques suivantes :
- il comporte une étape consistant à positionner l'élément de référence sur un gabarit, préalablement à celle de positionnement de l'élément de référence sur la charnière ; les jeux et affleurements de l'ouvrant par rapport à la caisse sont alors gérés au cours de cette étape de positionnement de l'élément de référence, grâce au gabarit ;
- l'étape de positionnement de l'élément de référence sur la charnière est réalisée lorsque la charnière est dans une position correspondant à la position fermée de l'ouvrant ;
- on réalise l'étape de positionnement de l'élément de référence sur la charnière, grâce au fait que l'élément de référence possède une embase ayant une forme adaptée pour lui permettre d'être introduite dans un orifice prévu dans la chamière et être retenue dans l'orifice, après un mouvement de l'embase par rapport à l'orifice ;
- l'embase a des dimensions inférieures à celles de l'orifice, mais avec une longueur supérieure à la largeur de l'orifice, de manière à ce qu'après son introduction dans l'orifice et un mouvement de rotation d'un quart de tour de l'embase par rapport à l'orifice, l'embase soit bloquée en translation, dans le sens opposé à celui d'introduction de l'embase dans l'orifice, par les bords longitudinaux de l'orifice.

Selon un autre aspect de l'invention, celle-ci concerne un dispositif selon la revendication 6.

Avantageusement ce dispositif présente les caractéristiques suivantes :
- l'élément de référence comporte une embase ayant une forme adaptée pour permettre le positionnement, avec un jeu, de cette embase dans un orifice prévu dans la charnière et un blocage de l'élément de référence sur la charnière, après un mouvement de l'embase par rapport à l'orifice ;
- l'embase a une paroi principalement rectangulaire, s'étendant dans un plan perpendiculaire à la direction d'introduction de l'embase dans l'orifice de la charnière ;
- la paroi a des dimensions inférieures à celles de l'orifice, mais avec une longueur supérieure à la largeur de l'orifice, de manière à ce qu'après son introduction dans l'orifice et un mouvement de rotation d'un quart de tour de l'embase par rapport à l'orifice, l'embase soit bloquée en translation, dans le sens opposé à celui d'introduction de l'embase dans l'orifice, par les bords longitudinaux de l'orifice ;
- il comporte une entretoise rigidement liée à l'embase et munie d'une encoche sur un quart de tour, définissant le mouvement de l'embase par rapport à l'orifice ;
- il comporte un capuchon muni d'une butée interne pour coopérer avec chacune des extrémités de l'encoche et bloquer le mouvement de l'entretoise par rapport au capuchon, à chaque extrémité du mouvement de l'embase par rapport à l'orifice.

D'autres aspects, buts et avantages de l'invention apparaîtront plus clairement à la lecture de la description détaillée qui suit. L'invention sera également mieux comprise à l'aide des références aux dessins sur lesquels :
- la figure 1 représente schématiquement en perspective, par une vue éclatée, le montage d'un élément de référence conforme à la présente invention, sur une charnière ;
- la figure 2 représente en coupe transversale, selon un plan passant par l'axe principal de l'élément de référence représenté sur la figure 1, un ensemble comprenant une charnière, cet élément de référence et un ouvrant ;
- la figure 3 représente schématiquement en coupe, selon un plan passant par un axe avant-arrière du véhicule automobile et par l'axe principal de l'élément de référence représenté sur les figures 1 et 2, un gabarit pour le montage de cet élément de référence, sur une charnière ;
- la figure 4 représente schématiquement en perspective partielle, le gabarit représenté sur la figure 3 ;
- les figures 5a, 6a, et 7a représentent schématiquement en coupe, selon un plan perpendiculaire à l'axe principal de l'élément de référence représenté sur les figures 1 et 2, l'entretoise de cet élément de référence, respectivement dans une position d'introduction de l'élément de référence dans un orifice de la charnière, dans une position intermédiaire et dans une position de blocage de l'élément de référence sur la charnière ;
- les figures 5b, 6b, et 7b représentent schématiquement, dans les configurations correspondant respectivement aux figures 5a, 6a et 7a, l'élément de référence représenté sur les figures 1, 2, 5a, 6a et 7a, en coupe selon un plan parallèle à celui de la coupe des figures 5a, 6a et 7a, mais passant par la charnière.

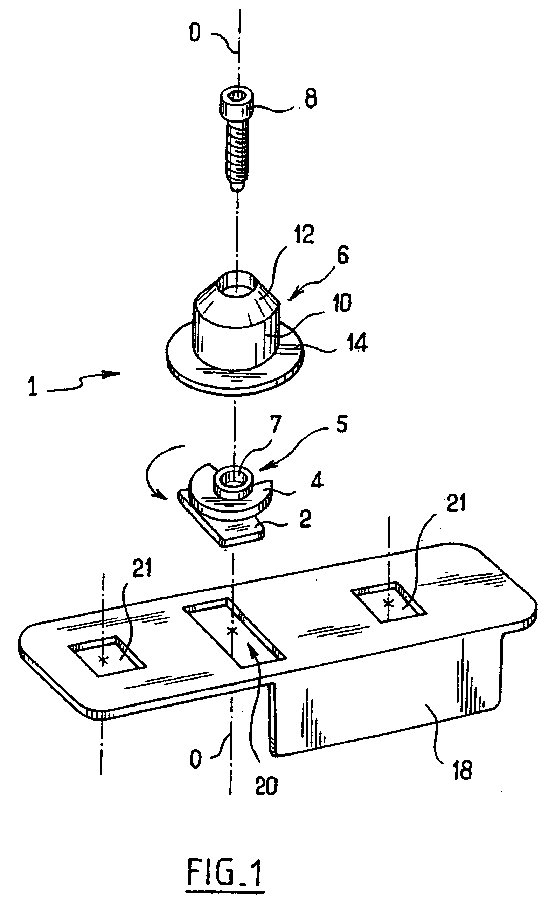

Un exemple préféré mais non limitatif de dispositif pour le montage d'un ouvrant de coffre arrière sur une chaîne de fabrication de véhicules automobiles conforme à la présente invention est représentée sur les figures 1, 2, 3, 4, 5a, 5b, 6a, 6b, 7a et 7b. Selon cet exemple, le dispositif pour le montage d'un ouvrant conforme à la présente invention comprend un élément de référence 1 comportant une embase 2, une entretoise 4 et un capuchon 6.

Comme représenté sur la figure 1, l'embase 2 est formée d'une plaque rectangulaire. L'entretoise 4 est formée d'un disque muni, sur sa périphérie d'une encoche 5, sur un quart de tour. L'embase 2 et l'entretoise 4 sont placés l'un sur l'autre, l'axe central du disque de l'entretoise 4 passant par le centre de la plaque rectangulaire de l'embase 2. Cet axe coïncide avec l'axe principal O-O de l'élément de référence 1. L'embase 2 et l'entretoise 4 sont solidaires l'une de l'autre. Un canal 7 cylindrique de révolution dont l'axe de révolution coïncide avec l'axe de symétrie du disque, traverse l'ensemble formé de l'embase 2 et de l'entretoise 4. Ce canal 7 est intérieurement fileté de manière à coopérer avec une vis 8.

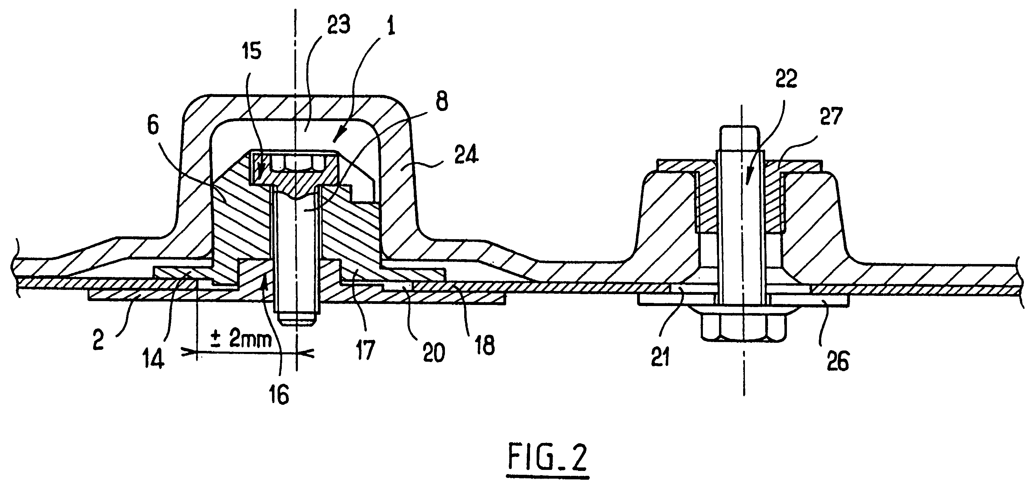

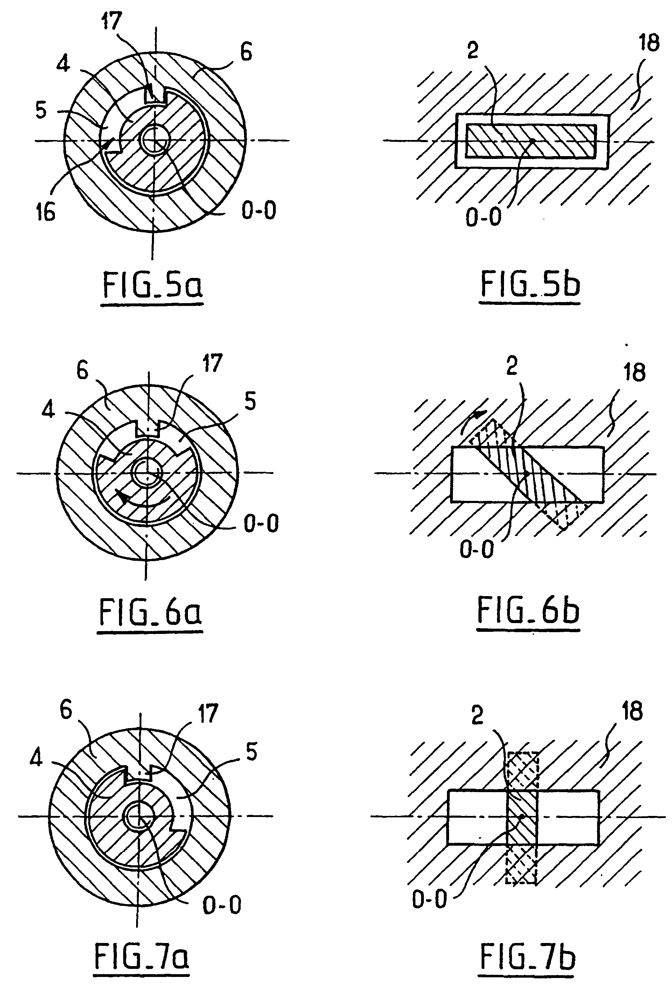

Le capuchon 6 est constitué d'une bague 10 cylindrique de révolution autour de l'axe principal O-O de l'élément de référence 1. Cette bague 10 se poursuit à l'un de ses bords par un tronc de cône 12 dont le sommet est coupé pour former un orifice destiné au passage de la vis 8. L'autre bord de la bague 10 est muni d'une collerette 14. Cette collerette 14 a une forme de rondelle s'étendant dans un plan perpendiculaire à l'axe principal O-O de l'élément de référence 1. La paroi interne de la bague 10 comporte des évidements 15, 16 destinés au logement de la tête de la vis 8 et de l'entretoise 4 (voir figure 2). Le capuchon 6 est maintenu sur l'ensemble constitué de l'embase 2 et de l'entretoise 4, par la tête de la vis 8. L'évidement 16 dans lequel est logé l'entretoise 4, comporte une butée 17 (voir figures 5a, 6a et 7a). Cette butée 17 est constituée d'une nervure saillant radialement en direction de l'axe à partir de la face interne de l'évidement 16, en s'étendant radialement sur une épaisseur approximativement égale à la profondeur de l'encoche 5 et, parallèlement à l'axe principal O-O de l'élément de référence 1, sur la hauteur de l'évidement 16.

L'invention concerne également un procédé de montage d'un ouvrant sur une chaîne de fabrication de véhicules automobiles, mettant en oeuvre l'élément de référence 1.

Selon ce procédé, une charnière 18 est montée sur une caisse 29 de véhicule automobile, sans réglage spécifique (voir figures 1 et 2, en particulier). Ce montage est réalisé d'une manière classique.

La charnière 18 comporte un orifice 20, pour la fixation de l'élément de référence 1 et deux orifices 21, pour la fixation de l'ouvrant sur la charnière 18. Pour l'exemple exposé ici, l'orifice 20 est rectangulaire, la largeur et la longueur de cet orifice 20 étant légèrement supérieures à celles de la plaque rectangulaire constitutive de l'embase 2.

La charnière 18 est mise dans une position correspondant à la position fermée de l'ouvrant. L'élément de référence 1 est ensuite disposé sur un gabarit 25 adapté.

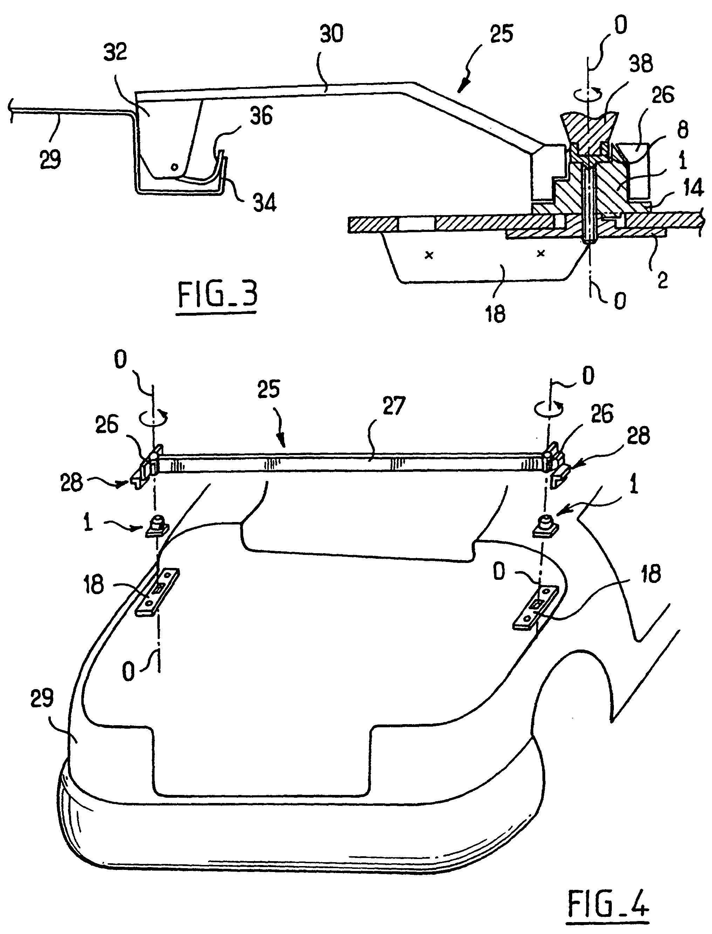

Comme représenté sur les figure 3 et 4, ce gabarit 25 permet un positionnement par rapport à la caisse 29, selon les axes X et Y, l'axe X correspondant à l'axe longitudinal avant-arrière du véhicule et l'axe Y correspond à l'axe transversal droite-gauche du véhicule. Le gabarit 25 comporte deux logements 26 dans chacun desquels est disposé un élément de référence 1. Les deux logements 26 sont liés entre eux par une barre transversale 27, dont la longueur est déteminée pour positionner avec précision les éléments de référence 1 l'un par rapport à l'autre, selon l'axe Y (figure 4). Chaque logement 26 est aussi lié à une cale 28, permettant de positionner le gabarit 25 par rapport à la caisse 29 selon la direction Y. Chaque logement 26 est également lié à une barre longitudinale 30, permettant de positionner le gabarit 25 par rapport à la caisse 29 selon la direction X (figure 3). L'extrémité libre de chaque barre longitudinale 30, c'est-à-dire l'extrémité opposée à celle liée au logement 26, est munie d'un patin de référence 32 permettant de positionner le gabarit 25 dans la feuillure 34 d'étanchéité du coffre arrière du véhicule automobile. Ce patin de référence 32 est lui même muni d'un ressort de placage 36, permettant de caler le patin de référence 32 dans la feuillure 34. Ainsi le gabarit 25 est positionné sur la caisse 29, sans qu'il soit nécessaire de le maintenir en place par une intervention manuelle.

Lorsque l'ensemble constitué des éléments de référence 1 et du gabarit 25 est disposé sur la caisse 29, il suffit de donner un quart de tour de vis, grâce à une visseuse 38, pour fixer chaque élément de référence 1, sur la charnière 18. En effet, ce mouvement de quart de tour est transmis, par la contrainte de vis, à l'embase 2, permettant ainsi le blocage de l'élément de référence 1 sur la charnière 18, comme représenté de manière détaillée sur les figures 5a, 5b, 6a, 6b, 7a et 7b. En position de blocage, la collerette 14 et l'embase 2 serrent entre elles une partie des bords de l'orifice 20.

Lorsque l'élément de référence 1 est positionné sur la charnière 18, une extrémité de l'encoche 5 est en contact avec la butée 17 (figure 5a) et l'embase 2 est introduite dans l'orifice 20 (figure 5b), l'axe longitudinal de l'embase 2 étant parallèle à celui de l'orifice 20.

Lorsque la vis 8 a été tournée d'un huitième de tour, dans le sens des aiguilles d'une montre, par rapport à la position d'introduction de l'embase 2 dans l'orifice 20, l'encoche 5 a pivoté du même angle et la butée 17 se trouve au milieu de l'encoche 5 (figure 6a). Les extrémités longitudinales de l'embase 2 sont alors en partie engagées sous les bords longitudinaux de l'orifice 20 (figure 6b). L'élément de référence 1 peut être positionné par rapport à l'orifice 20 avec un certain jeu. Par exemple, l'embase 2 peut être plus ou moins proche de l'une des extrémités longitudinales de l'orifice 20. Un autre jeu sera décrit plus loin en relation avec la figure 2.

Lorsque la vis 8 a été tournée d'un quart de tour, dans le sens des aiguilles d'une montre, par rapport à la position d'introduction de l'embase 2 dans l'orifice 20, l'encoche 5 a pivoté du même angle et l'autre extrémité de l'encoche 5 est en contact avec la butée 17 (figure 7a). Les extrémités longitudinales de l'embase 2 sont complètement engagées sous les bords longitudinaux de l'orifice 20 (figure 7b). L'élément de référence 1 est alors bloqué sur la charnière 18. On peut alors ôter le gabarit 25.

Après avoir bloqué l'élément de référence 1 sur la charnière 18, l'ouvrant est fixé sur cette dernière à l'aide de deux boulons 22 (un seul de ces boulons 22 est représenté sur la figure 2), en indexant la position de l'ouvrant 24 par rapport à l'élément de référence 1. En effet, l'ouvrant 4 est pourvu d'une cavité 23, adaptée pour être introduite, sans jeux substantiel, sur l'élément de référence 1. Chaque boulon 22 passe à travers un orifice 21 de la charnière, dont les dimensions sont plus grandes que le diamètre externe de la tige fileté de chaque boulon 22, de manière à autoriser le positionnement de l'ouvrant 24 sur la charnière 18, avec un certain jeu. Une rondelle 26 est intercalée entre la tête de vis du boulon 22 et la charnière 18 pour empêcher la tête de vis du boulon 22 de passer à travers cet orifice 21. Un insert 27 fait office d'écrou pour chaque boulon 22 et permet de serrer l'ouvrant 24 sur la charnière 18.

Comme représenté sur la figure 2, la distance entre les bords longitudinaux de l'orifice 20 est égale à la largeur de l'embase 18 plus un certain jeu. Ce jeu est tel qu'il permet de positionner l'élément de référence 1 par rapport à l'orifice 20, dans le sens de la largeur de l'embase 2, avec une précision, par exemple, de plus ou moins deux millimètres.

Il a été décrit ci-dessus, un élément de référence 1 ayant une embase 2 de forme rectangulaire. D'autres formes sont évidemment envisageables sans sortir du cadre de l'invention, telles que triangulaires, en forme de demi disque, ou toute autre forme qui peut, en combinaison avec celle de l'orifice 20, après un mouvement de l'embase 2 par rapport à l'orifice 20 et leur positionnement mutuel avec un certain jeu, permettre un blocage de l'élément de référence 1 sur la charnière 18.

L'élément de référence 1 peut également avoir un capuchon 6 de formes variées. Ce capuchon 6 peut également être prévu avec des moyens de retenue de l'ouvrant sur l'élément de référence 1, tels que des moyens de clipage, etc.

Le procédé selon l'invention est avantageusement utilisé pour le montage d'ouvrants tels que des portières, des portes de coffres ou de compartiments moteur, des hayons arrières, etc.

## Revendications

1. Procédé de montage d'ouvrant sur une caisse (29) de véhicule, comprenant :
- une étape de montage d'une charnière (18) sur une caisse (29) de véhicule,
- une étape de positionnement d'un élément de référence (1) sur la charnière (18) dans une position prédéterminée par rapport à la caisse (29),
- une étape de fixation de l'élément de référence sur la charnière, l'élément de référence étant réglable en position sur celle-ci, et
- une étape de montage d'un ouvrant (24) sur la charnière (18) en positionnant l'ouvrant (24) par rapport à l'élément de référence (1).

2. Procédé selon la revendication 1, comprenant en outre une étape consistant à positionner l'élément de référence (1) sur un gabarit (25), préalablement à celle de positionnement de l'élément de référence (1) sur la charnière (18).

3. Procédé selon l'une des revendications précédentes, dans lequel l'étape de positionnement de l'élément de référence (1) sur la charnière (18) est réalisée lorsque la charnière (18) est dans une position correspondant à la position fermée de l'ouvrant (24).

4. Procédé selon l'une des revendications précédentes, dans lequel on réalise l'étape de positionnement de l'élément de référence (1) sur la charnière (18), grâce au fait que l'élément de référence (1). possède une embase (2) ayant une forme adaptée pour lui permettre d'être introduite dans un orifice (20) prévu dans la charnière (18) et être retenue dans l'orifice (20), après un mouvement de l'embase (2) par rapport à l'orifice (20).

5. Procédé selon la revendication 4, dans lequel l'embase (2) a des dimensions inférieures à celles de l'orifice (20), mais avec une longueur supérieure à la largeur de l'orifice (20), de manière à ce qu'après son introduction dans l'orifice (20) et un mouvement de rotation d'un quart de tour de l'embase (2) par rapport à l'orifice (20), l'embase (2) soit bloquée en translation, dans le sens opposé à celui d'introduction de l'embase (2) dans l'orifice (20), par les bords longitudinaux de l'orifice (20).

6. Dispositif pour le montage d'un ouvrant sur une caisse (29) de véhicule, comprenant une charnière (18), **caractérisé par le fait qu'**il comporte un élément de référence (1) pouvant être fixé à la charnière (18) en étant réglable en position sur celle-ci, l'élément de référence -(18) et l'ouvrant (24) étant conformés pour permettre le montage de l'ouvrant (24) sur la charnière (18), dans une position prédéterminée de l'ouvrant (18) par rapport à l'élément de référence (1).

7. Dispositif selon la revendication 6, dans lequel l'élément de référence (1) comporte une embase (2) ayant une forme adaptée pour permettre le positionnement, avec un jeu, de cette embase (2) dans un orifice (20) prévu dans la charnière (18) et un blocage de l'élément de référence sur la charnière (18), après un mouvement de l'embase (2) par rapport à l'orifice (20).

8. Dispositif selon la revendication 7, dont l'embase (2) a une paroi principalement rectangulaire, s'étendant dans un plan perpendiculaire à la direction d'introduction de l'embase (2) dans l'orifice (20) de la charnière (18).

9. Dispositif selon la revendication 8, dont la paroi a des dimensions inférieures à celles de l'orifice (20), mais avec une longueur supérieure à la largeur de l'orifice (20), de manière à ce qu'après son introduction dans l'orifice (20) et un mouvement de rotation d'un quart de tour de l'embase (2) par rapport à l'orifice (20), l'embase (2) soit bloquée en translation, dans le sens opposé à celui d'introduction de l'embase (2) dans l'orifice (20), par les bords longitudinaux de l'orifice (20).

10. Dispositif selon l'une des revendications 7 à 9, comportant une entretoise (4) rigidement liée à l'embase (2) et munie d'une encoche (5) sur un quart de tour, définissant le mouvement de l'embase (2) par rapport à l'orifice (20).

11. Dispositif selon la revendication 10, comportant un capuchon (6) muni d'une butée interne pour coopérer avec chacune des extrémités de l'encoche (5) et bloquer le mouvement de l'entretoise (4) par rapport au capuchon (6), à chaque extrémité du mouvement de l'embase (2) par rapport à l'orifice (20).

## Claims

1. A method of mounting a hinged panel on a vehicle body (29), the method comprising:
· a step of mounting a hinge (18) on a vehicle body (29);
· a step of positioning a reference element (1) on the hinge (18) in a position that is predetermined relative to the body (29);
· a step of fixing the reference element on the hinge, the reference element being adjustable in position thereon; and
· a step of mounting a panel on the hinge (18) while positioning the panel (24) relative to the reference element (1).

2. A method according to claim 1, further comprising a step consisting in positioning the reference element (1) on a jig (25), prior to the step of positioning the reference element (1) on the hinge (18).

3. A method according to either preceding claim, in which the step of positioning the reference element (1) on the hinge (18) is performed while the hinge (18) is in a position corresponding to the closed position of the panel (24).

4. A method according to any preceding claim, in which the step of positioning the reference element (1) on the hinge (18) is performed by virtue of the fact that the reference element (1) possesses a base (2) of shape adapted to enable it to be inserted in an orifice (20) provided in the hinge (18) and to be retained in the orifice (20) after the base (2) has been moved relative to the orifice (20).

5. A method according to claim 4, in which the base (2) is of dimensions smaller than the dimensions of the orifice (20) but is of length that is greater than the width of the orifice (20) so that after the base (2) has been inserted in the orifice (20) and after it has been turned through quarter of a turn relative to the orifice (20), the longitudinal edges of the orifice (20) prevent the base (2) from moving in translation in the direction opposite to the direction in which the base (2) was inserted into the orifice (20).

6. A device for mounting panel on a vehicle body (29), the device comprising a hinge (18) and being **characterized by** the fact that it includes a reference element (1) capable of being fixed to the hinge (18) while being adjustable in position thereon, the reference element (1) and the panel (24) being shaped to enable the panel (24) to be mounted on the hinge (18) with the panel (24) in a predetermined position relative to the reference element (1).

7. A device according to claim 6, in which the reference element (1) includes a base (2) of a shape adapted to enable the base (2) to be positioned with clearance in an orifice (20) provided in the hinge (18), and to enable the reference element to be locked in position on the hinge (18) after moving the base (2) relative to the orifice (20).

8. A device according to claim 7, in which the base (2) has a wall that is mainly rectangular, extending in a plane perpendicular to the direction in which the base (2) is inserted in the orifice (20) of the hinge (18).

9. A device according to claim 8, in which the wall has dimensions smaller than those of the orifice (20), but of length that is longer than the width of the orifice (20), such that after the base (2) has been inserted in the orifice (20) and after it has been turned through quarter of a turn relative to the orifice (20), the longitudinal edges of the orifice (20) prevent the base (2) from moving in translation in the direction opposite to the direction in which the base (2) was inserted into the orifice (20).

10. A device according to any one of claims 7 to 9, including a spacer (4) rigidly connected to the base (2) and provided with a notch (5) occupying one quarter of a turn, limiting movement of the base (2) relative to the orifice (20).

11. A device according to claim 10, including a cap (6) provided with an internal abutment for co-operating with each of the ends of the notch (5) and preventing the spacer (4) from moving relative to the cap (6) at each of the ends of the movement of the base (2) relative to the orifice (20).

## Patentansprüche

1. Verfahren zur Montage eines Deckels oder Türflügels auf einer Fahrzeugkarosserie (29), umfassend:
- einen Schritt der Montage eines Scharniers (18) auf einer Karosserie (29) eines Fahrzeugs,
- einen Schritt der Positionierung eines Bezugselements (1) auf dem Scharnier (18) in einer vorbestimmten Position, bezogen auf die Karosserie (29),
- einen Schritt der Befestigung des Bezugselements auf dem Scharnier,
wobei das Bezugselement in der Lage auf diesem einstellbar ist, und
- einen Schritt der Montage eines Deckels bzw. Türflügels (24) auf dem Scharnier (18), indem man den Deckel bzw. Türflügel (24) bezüglich des Bezugselements (1) positioniert.

2. Verfahren nach Anspruch 1, außerdem umfassend einen Schritt, der darin besteht, das Bezugselement (1) auf einem Formstück bzw. einer Lehre (25) anzubringen, und zwar vor dem Schritt der Positionierung des Bezugselements (1) auf dem Scharnier (18).

3. Verfahren nach einem der vorangehenden Ansprüche, wobei der Schritt der Positionierung des Bezugselementes (1) auf dem Scharnier (18) durchgeführt wird, wenn das Scharnier (18) sich in einer Lage befindet, die der Lage des geschlossenen Deckels bzw. Türflügels (24) entspricht.

4. Verfahren nach einem der vorangehenden Ansprüche, wobei man den Schritt der Positionierung des Bezugselementes (1) auf dem Scharnier (18) dank der Tatsache durchführt, daß das Bezugselement (1) einen Sockel (2) besitzt, der eine Form aufweist, die dazu eingerichtet ist, es ihm zu gestatten, in eine in dem Scharnier (18) vorgesehene Öffnung (20) eingeführt zu werden, und in der Öffnung (20) nach einer Bewegung des Sockels (2) bezüglich der Öffnung (20) zurückgehalten zu werden.

5. Verfahren nach Anspruch 4, wobei der Sockel (2) Abmessungen aufweist, die kleiner sind als die der Öffnung (20), aber mit einer Länge, die größer ist als die Breite der Öffnung (20), und zwar derart, daß der Sockel (2), nach seiner Einführung in die Öffnung (20) und einer Viertelumdrehung des Sockels (2) bezüglich der Öffnung (20), gegenüber einer Translationsbewegung durch die Längsränder der Öffnung (20) in der Richtung gesperrt ist, die der der Einführung des Sockels (2) in die Öffnung (20) entgegengesetzt ist.

6. Vorrichtung für die Montage eines Deckels bzw. Türflügels auf einer Fahrzeugkarosserie (29), umfassend ein Scharnier (18), **dadurch gekennzeichnet, daß** sie ein Bezugselement (1) aufweist, das am Scharnier (18) befestigt werden kann, wobei es auf diesem in der Lage einstellbar ist, wobei das Bezugselement (18) und der Deckel bzw. Türflügel (24) so ausgebildet sind, daß sie die Montage des Deckels bzw. Türflügels (24) auf dem Scharnier (18) in einer vorbestimmten Lage des Deckels bzw. Türflügels (18) in Bezug auf das Bezugselement (1) gestatten.

7. Vorrichtung nach Anspruch 6, bei der das Bezugselement (1) einen Sockel (2) aufweist, der eine Form hat, die dazu eingerichtet ist, um die Positionierung dieses Sockels (2) mit Spiel in einer Öffnung (20), die in dem Scharnier (18) vorgesehen ist, sowie eine Blockierung des Bezugselementes auf dem Scharnier (18) nach einer Drehbewegung des Sockels (2) bezüglich der Öffnung (20) zu gestatten.

8. Vorrichtung nach Anspruch 7, deren Sockel (2) eine hauptsächlich rechteckige Wand hat, die sich in einer Ebene senkrecht zur Richtung des Einführens des Sockels (2) in die Öffnung (20) des Scharniers (18) erstreckt.

9. Vorrichtung nach Anspruch 8, deren Wand Abmessungen hat, die kleiner sind als die der Öffnung (20), aber mit einer Länge, die größer ist als die Breite der Öffnung (20), und zwar derart, daß der Sockel (2), nach seiner Einführung in die Öffnung (20) und nach einer Drehbewegung um eine Viertelumdrehung bezüglich der Öffnung (20), gegenüber einer Translationsbewegung durch die Längsränder der Öffnung (20) in der Richtung gesperrt ist, die der der Einführung des Sockels (2) in die Öffnung (20) entgegengesetzt ist.

10. Vorrichtung nach einem der Ansprüche 7 bis 9, die ein Zwischenstück (4) umfaßt, das starr mit dem Sockel (2) verbunden ist und über eine Viertelumdrehung mit einer Kerbe (5) versehen ist, die die Bewegung des Sokkels (2) bezüglich der Öffnung (20) definiert.

11. Vorrichtung nach Anspruch 10, die eine Kappe (6) umfaßt, die mit einem inneren Anschlag versehen ist, um mit jedem der Enden der Kerbe (5) zusammenzuwirken und die Bewegung des Zwischenstücks (4) bezüglich der Kappe (6) an jedem Ende der Bewegung des Sockels (2) bezüglich der Öffnung (20) zu blockieren.
